# EUROPEAN PATENT APPLICATION

(11) **EP 4 579 039 A1**
(43) Date of publication of application: **02.07.2025**
(21) Application number: 24208249.3
(22) Date of filing: 23.10.2024
(51) Int. Cl.: E01C 19/48, G01C 21/20, G05D 1/646

(54) **ROAD PAVING MACHINE AND MANAGEMENT SYSTEM**

(30) Priority: 27.12.2023 JP 2023221890
(71) Applicant: Sumitomo (S.H.I.) Construction Machinery Co., Ltd., Shinagawa-ku Tokyo 141-6025 (JP)
(72) Inventor: ITOH, Takumi, Chiba, 263-0001 (JP); TERAMOTO, Tota, Chiba, 263-0001 (JP)
(74) Representative: Louis Pöhlau Lohrentz

(57) **Abstract**

Provided is a road paving machine capable of suppressing degradation of construction accuracy.

The road paving machine including a tractor (1) includes a control device (50) that estimates a current position of the road paving machine and a steering device (65) that steers the tractor (1), based on the current position. The control device (50) is configured to output information related to a data amount available for estimating the current position.

## Description

### BACKGROUND OF THE INVENTION

### Field of the Invention

The present disclosure relates to a road paving machine and a management system.

### Description of Related Art

In the related art, an asphalt finisher including a tractor, a hopper installed on a front side of the tractor to receive a paving material, a conveyor that conveys the paving material inside the hopper to a rear side of the tractor, a screw that spreads the paving material conveyed by the conveyor and scattered on a road surface on a rear side of the tractor in a vehicle width direction, and a screed that levels the paving material spread by the screw on a rear side of the screw is known.

For example, Japanese Unexamined Patent Publication No. 2021-113490 discloses a road paving machine including a paving screed, a GNSS receiver, and an electronic control system. A current position of the road paving machine is determined by the GNSS receiver, a compaction performance of the paving screed is automatically controlled as a function of a target layer thickness, and road surfaces are paved with paving materials at each previous compaction degree.

### SUMMARY OF THE INVENTION

However, in the road paving machine disclosed in Japanese Unexamined Patent Publication No. 2021-113490, when estimation accuracy of the current position is degraded, construction accuracy may be degraded.

An aspect of the present disclosure aims to provide a road paving machine which can suppress degradation of construction accuracy.

According to an aspect of the present disclosure, there is provided a road paving machine including a tractor. The road paving machine includes a control device that estimates a current position of the road paving machine, and a steering device that steers the tractor, based on the current position. The control device is configured to output information related to a data amount available for estimating the current position.

According to the aspect of the present disclosure, since estimation accuracy of the current position can be easily recognized, degradation of construction accuracy can be suppressed.

### BRIEF DESCRIPTION OF THE DRAWINGS

Fig. 1 is a schematic view illustrating an example of an overall configuration of a management system according to an embodiment.
Fig. 2 is a side view illustrating an example of an asphalt finisher according to the embodiment.
Fig. 3 is a top view illustrating an example of the asphalt finisher according to the embodiment.
Fig. 4 is a rear view illustrating an example of the asphalt finisher according to the embodiment.
Fig. 5 is a block diagram illustrating an example of a hardware configuration of a remote management device according to the embodiment.
Fig. 6 is a view illustrating a first example of a situation where reliability of a current position is degraded.
Fig. 7 is a view illustrating a second example of the situation where the reliability of the current position is degraded.
Fig. 8 is a view illustrating a third example of the situation where the reliability of the current position is degraded.
Fig. 9 is a block diagram illustrating an example of a functional configuration of a controller according to the embodiment.
Fig. 10 is a flowchart illustrating an example of a management method according to the embodiment.

### DETAILED DESCRIPTION OF THE INVENTION

Hereinafter, each embodiment of the present disclosure will be described with reference to the accompanying drawings. In the present specification and the drawings, the same reference numerals are assigned to components having substantially the same functional configuration, and repeated description will be omitted.

### [Embodiment]

An embodiment of the present disclosure is a management system that manages an asphalt finisher, which is an example of a road paving machine. The asphalt finisher according to the present embodiment has an automatic paving function of automatically paving a road surface while performing automatic steering of a tractor and automatic expansion/contraction of a screed.

In the automatic paving function of the asphalt finisher, it is important to accurately estimate a current position of a vehicle. A controller of the asphalt finisher realizes the automatic paving function by estimating the current position on a road surface which is a construction target, based on positioning data in which a vehicle position is detected by a surveying instrument, and by controlling steering of a tractor or expansion/contraction of a screed. Therefore, construction accuracy is greatly affected by estimation accuracy of the current position.

The estimation accuracy of the current position depends on a state of a sensor for acquiring the positioning data. The sensor for acquiring the positioning data is different depending on the surveying instrument. For example, the surveying instrument includes a total station, a positioning satellite, and the like. For example, the positioning satellite includes a Global Positioning System (GPS) and a Global Navigation Satellite System (GNSS). When the surveying instrument is the total station, the sensor is a wireless communication device that receives a wireless signal transmitted from the total station. When the surveying instrument is the positioning satellite, the sensor is a radio wave receiver that receives a satellite signal transmitted from the positioning satellite.

As the estimation accuracy of the current position is higher, reliability of the estimated current position is higher. The reliability of the current position depends on a data amount of the positioning data available for estimating the current position. For example, when the current position is estimated based on the positioning data received from the total station, and when the positioning data from the total station is interrupted, the reliability of the current position is lower. In addition, for example, when the current position is estimated based on the positioning data received from the positioning satellite, as the number of the satellites capable of communication increases, the reliability of the current position is higher.

On the other hand, the asphalt finisher in the related art has no counter-measure for recovering the reliability, when the reliability of the current position is degraded. Therefore, the asphalt finisher in the related art continues the automatic paving, based on the current position having low reliability, even when the reliability of the current position is degraded. As a result, in a range where the reliability of the current position is degraded, there is a possibility that the construction accuracy is degraded. On the other hand, when a worker can be notified that the reliability of the current position of the asphalt finisher is degraded, the worker can take a counter-measure for recovering the reliability. In this way, the asphalt finisher needs to have a function of notifying the reliability of the current position.

### <Overall Configuration of Management System>

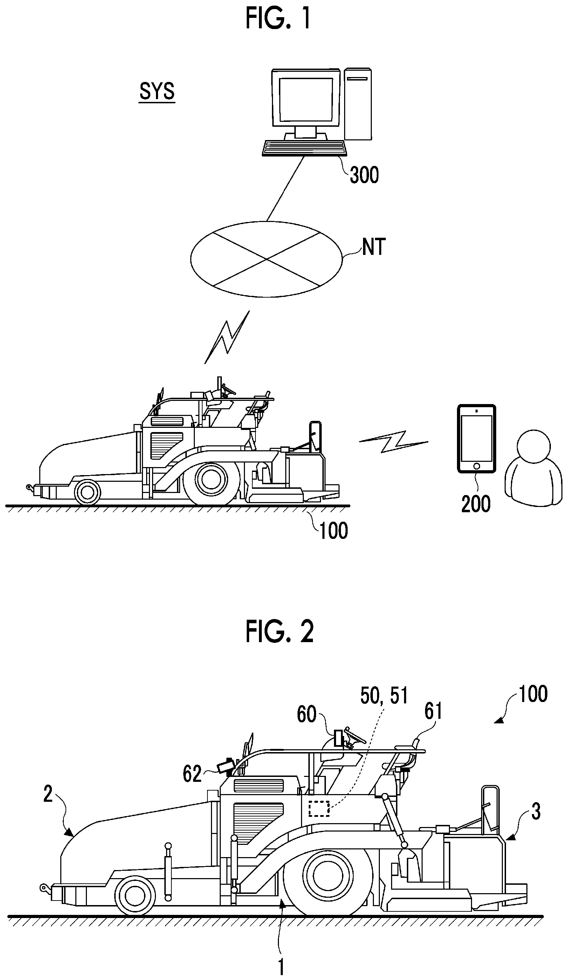

An overall configuration of a management system SYS according to the present embodiment will be described with reference to Fig. 1. Fig. 1 is a schematic view illustrating an example of the overall configuration of the management system according to the embodiment.

As illustrated in Fig. 1, the management system SYS according to the embodiment includes an asphalt finisher 100, a communication terminal 200, and a remote management device 300. The asphalt finisher 100 and the remote management device 300 are connected to each other by a public network NT.

In addition, for example, the management system SYS may perform various settings related to control of the asphalt finisher 100 in response to an input from a user or automatically in the communication terminal 200, and may transmit the settings to the asphalt finisher 100. In this manner, various operations of the asphalt finisher 100 can be controlled or monitored from the communication terminal 200.

In addition, the asphalt finisher 100 may transmit information indicating a current situation to any one or more of the communication terminal 200 and the remote management device 300. Furthermore, the asphalt finisher 100 may transmit log information indicating a paving result of the road surface to any one or more of the communication terminal 200 and the remote management device 300.

The remote management device 300 is a terminal provided to remotely manage a work site. For example, the remote management device 300 manages a construction situation by storing the log information transmitted from the asphalt finisher 100.

For example, the communication terminal 200 is a terminal possessed by a user who manages work in the work site, a user who carries out work in the work site, or the like. In the present embodiment, the communication terminal 200 is a portable information terminal such as a smartphone or a tablet terminal. The communication terminal 200 receives image information indicating a current construction state of the asphalt finisher 100 from the asphalt finisher 100, and displays the image information on a display unit (for example, a liquid crystal panel). In this manner, the user who manages the work in the work site can recognize the current construction state of the asphalt finisher 100.

The number of the communication terminals 200 included in the management system SYS may be one or more. In this manner, the management system SYS can provide information related to the asphalt finisher 100 to a plurality of the users respectively using the plurality of communication terminals 200, through the plurality of communication terminals 200.

The number of the asphalt finishers 100 included in the management system SYS may be one or more. In this manner, the management system SYS can collect data, provide information to the user, based on the collected data, and can perform setting or the like related to the control of the asphalt finisher 100 while the asphalt finisher 100 is used as a target.

### <Outline of Asphalt Finisher>

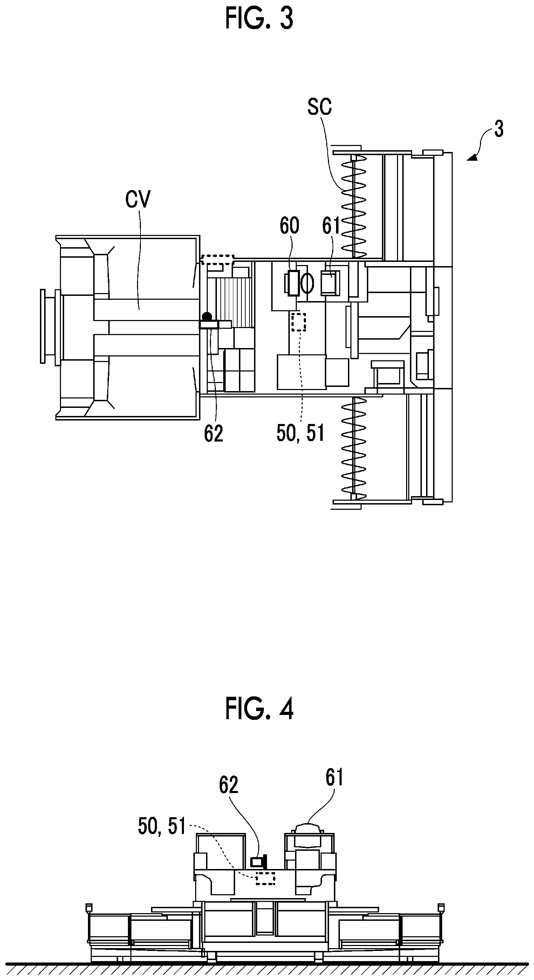

An outline of an asphalt finisher 100 which is an example of a road paving machine according to the embodiment will be described with reference to Figs. 2 to 4. Fig. 2 is a side view illustrating an example of the asphalt finisher according to the embodiment. Fig. 3 is a top view illustrating an example of the asphalt finisher according to the embodiment. Fig. 4 is a rear view illustrating an example of the asphalt finisher according to the embodiment.

As illustrated in Figs. 2 to 4, the asphalt finisher 100 according to the embodiment mainly includes a tractor 1, a hopper 2, and a screed 3.

The tractor 1 is a mechanism for causing the asphalt finisher 100 to travel. In the present embodiment, the tractor 1 moves the asphalt finisher 100 by causing a traveling hydraulic motor to rotate two or four wheels. The traveling hydraulic motor rotates by receiving a hydraulic oil supplied from a hydraulic pump driven by a prime mover such as a diesel engine. The two or four wheels may be replaced with a crawler.

A controller 50, an auxiliary storage device 51, a display unit 60, a driver's seat 61, an information acquisition device 62, and the like are mounted on the tractor 1. Specifically, a cab including the display unit 60 and the driver's seat 61 is installed in a rear portion on an upper surface of the tractor 1, and the information acquisition device 62 is installed in a front end central portion on the upper surface of the tractor 1.

The hopper 2 is a mechanism for receiving a paving material. For example, the paving material includes an asphalt mixture or the like. In the present embodiment, the hopper 2 is configured to be openable and closable in a vehicle width direction by a hydraulic cylinder. The asphalt finisher 100 usually brings the hopper 2 into a fully open state so that a paving material is received from a loading platform of a dump truck. In addition, the asphalt finisher 100 continues traveling and construction while pushing a dump truck forward via a push roller, even when receiving the paving material from the loading platform of the dump truck. The paving material received inside the hopper 2 is fed to a front side of the screed 3 by using a conveyor CV and a screw SC. When the paving material in the hopper 2 is reduced, the asphalt finisher 100 closes the hopper 2, and collects the paving material near an inner wall of the hopper 2 in a central portion of the hopper 2. In this manner, the conveyor CV can convey the paving material to the screed 3.

The conveyor CV is driven by a hydraulic motor that rotates by receiving the hydraulic oil supplied from the hydraulic pump. In the present embodiment, the conveyor CV is configured to feed the paving material inside the hopper 2 to a rear side of the tractor 1 via a conveyance passage. The conveyance passage is a substantially rectangular parallelepiped space formed inside the tractor 1, and has a substantially rectangular inlet that opens into the hopper 2 on a front surface of the tractor 1.

The screw SC is driven by a hydraulic motor that rotates by receiving the hydraulic oil supplied from the hydraulic pump. In the present embodiment, the screw SC includes a center screw, a left screw, and a right screw. The center screw is installed within a width of the tractor 1. The left screw is connected to a left end of the center screw, and is installed to protrude to a left side from the width of the tractor 1. The right screw is connected to a right end of the center screw, and is installed to protrude to a right side from the width of the tractor 1.

The screed 3 is a mechanism for leveling the paving material. In the present embodiment, the screed 3 is a floating screed towed by the tractor 1, and is connected to the tractor 1 via a leveling arm. In the present embodiment, the screed 3 can be raised and lowered in a vertical direction, and is configured to be expandable/contractible in a vehicle width direction by a hydraulic cylinder. When the screed 3 expands in the vehicle width direction, the width of the screed 3 is larger than the width of the tractor 1.

In the present embodiment, the screed 3 includes a main screed, a left expansion/contraction screed, and a right expansion/contraction screed. The left expansion/contraction screed and the right expansion/contraction screed are configured to be expandable/contractible in the vehicle width direction. The left expansion/contraction screed and the right expansion/contraction screed which are expandable/contractible in the vehicle width direction are disposed to be offset from each other in a traveling direction. Therefore, the screed 3 can have the width (length in the vehicle width direction) longer than the width when not offset, and the width can be expanded longer in the vehicle width direction, and a newly constructed pavement body can be constructed in a wider range.

The controller 50 is an example of a control device that controls the asphalt finisher 100. For example, the controller 50 is a computer including a central processing unit (CPU), a volatile memory, a non-volatile memory, and the like. The controller 50 is a computer including the CPU and a random access memory (RAM), and is mounted on the tractor 1. For example, various functions of the controller 50 are realized in such a manner that the CPU executes a program stored in an auxiliary storage device 51.

The auxiliary storage device 51 is a device for storing various types of information. In the present embodiment, the auxiliary storage device 51 is a non-volatile memory, and is integrated with the controller 50. However, the auxiliary storage device 51 may be disposed outside the controller 50, as a structure different from the controller 50.

The display unit 60 is a device for displaying various types of information. In the present embodiment, the display unit 60 is a liquid crystal display, and displays various types of information in response to a control command from the controller 50. In addition, the display unit 60 may include an input device such as a touch panel or the like that receives an operation input of an operator of the asphalt finisher 100.

The information acquisition device 62 is a device for acquiring various types of information used for automatic paving control. In the present embodiment, the information acquisition device 62 acquires the positioning data for estimating the current position. In addition, the information acquisition device 62 acquires a detection result of detecting an object present around the asphalt finisher 100. The information acquisition device 62 outputs various types of acquired information to the controller 50.

### <Computer>

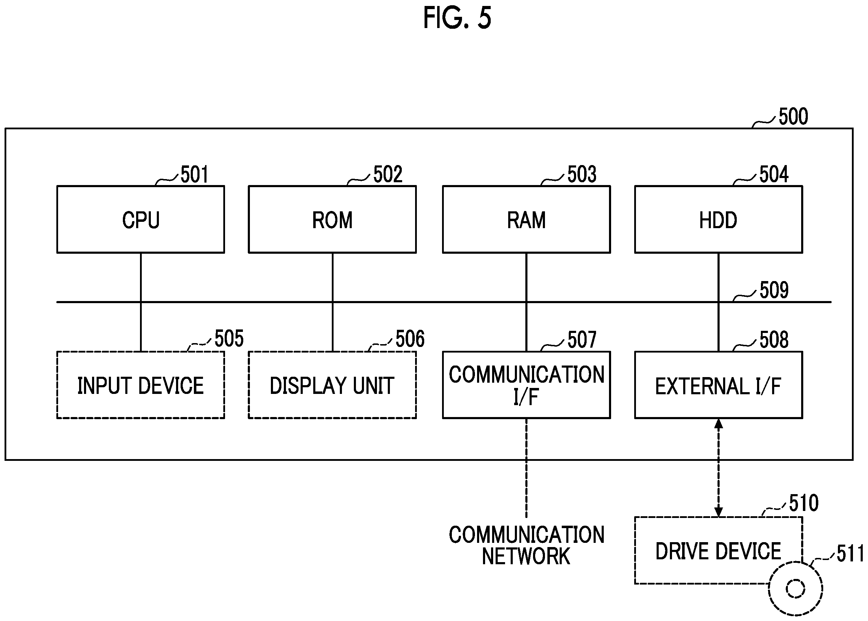

The controller 50 of the asphalt finisher 100, the communication terminal 200, and the remote management device 300 are realized by a computer, for example. Fig. 5 is a block diagram illustrating an example of a hardware configuration of the computer according to the embodiment.

As illustrated in Fig. 5, the computer 500 has a central processing unit (CPU) 501, a read only memory (ROM) 502, a random access memory (RAM) 503, a hard disk drive (HDD) 504, an input device 505, a display unit 506, a communication I/F (interface) 507, and an external I/F 508. The CPU 501, the ROM 502, and the RAM 503 form a so-called computer. Each hardware of the computer 500 is mutually connected via a bus line 509. The input device 505 and the display unit 506 may be used in a form in which both of these are connected to the external I/F 508.

The CPU 501 is a calculation device that realizes control and functions of the entire computer 500 by reading a program or data from a storage device such as the ROM 502, the HDD 504, or the like on the RAM 503 to execute processing. The computer 500 may have a graphics processing unit (GPU) in addition to the CPU 501 or instead of the CPU 501.

The ROM 502 is an example of a non-volatile semiconductor memory (storage device) that can hold a program or data even when a power source is turned off. The ROM 502 functions as a main storage device that stores various programs, data, and the like which are required for the CPU 501 to execute various programs installed in the HDD 504. Specifically, the ROM 502 stores data for setting boot programs such as a basic input/output system (BIOS), an extensible firmware interface (EFI), and the like which are executed when the computer 500 is booted, for setting an operating system (OS), for setting a network or the like.

The RAM 503 is an example of a volatile semiconductor memory (storage device) in which a program or data is erased when the power source is turned off. For example, the RAM 503 is a dynamic random access memory (DRAM), a static random access memory (SR_AM), or the like. The R_AM 503 provides a work area deployed when various programs installed in the HDD 504 are executed by the CPU 501.

The HDD 504 is an example of a non-volatile storage device that stores a program or data. The program or data stored in the HDD 504 includes an OS which is basic software that controls the entire computer 500, and an application that provides various functions on the OS. Instead of the HDD 504, the computer 500 may use a storage device (for example, a solid state drive (SSD)) using a flash memory as a storage medium.

The input device 505 is a touch panel, an operation key, a button, a keyboard, or a mouse used by a user to input various signals, and a microphone or the like that inputs sound data such as voice and the like.

The display unit 506 is configured to include a display such as a liquid crystal display, an organic electro-luminescence (EL) display, or the like that displays a screen, and a speaker or the like that outputs the sound data such as the voice and the like.

The communication I/F 507 is an interface connected to a communication network such that the computer 500 performs data communication.

The external I/F 508 is an interface with an external device. The external device includes a drive device 510.

The drive device 510 is a device for setting a recording medium 511. The recording medium 511 referred to here includes a medium that optically, electrically, or magnetically records information, such as a CD-ROM, a flexible disk, or an optical magnetic disk. In addition, the recording medium 511 may include a semiconductor memory or the like that electrically records information, such as a ROM and a flash memory. In this manner, the computer 500 can read and/or write the information on the recording medium 511 via the external I/F 508.

For example, various programs installed in the HDD 504 are installed by setting the distributed recording medium 511 in the drive device 510 connected to the external I/F 508 and by causing the drive device 510 to read various programs recorded in the recording medium 511. Alternatively, various programs installed in the HDD 504 may be installed by being downloaded from another network different from the communication network via the communication I/F 507.

### <Situation Where Reliability of Current Position Is Degraded>

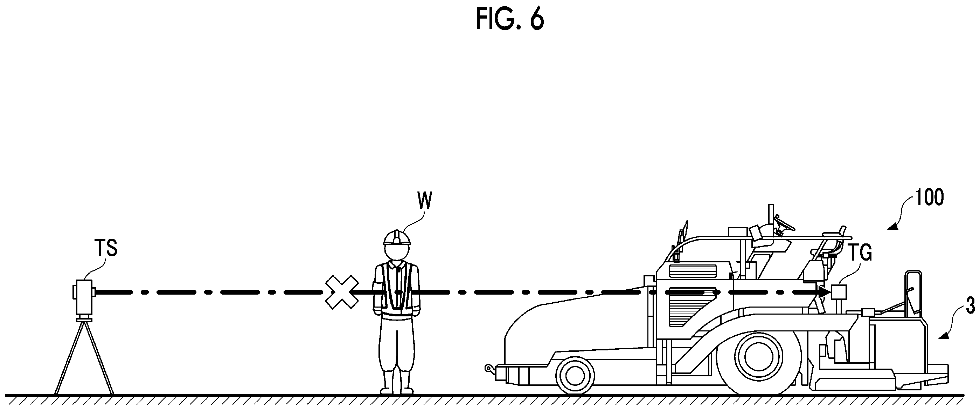

A situation where the reliability of the current position is degraded will be specifically described with reference to Figs. 6 to 8. Here, a situation that may occur when the current position is estimated by using the total station will be mainly described.

Fig. 6 is a view illustrating a first example of the situation where the reliability of the current position is degraded. As illustrated in Fig. 6, a total station TS is installed at a position separated from the asphalt finisher 100. In many cases, for example, the total station TS is installed within a predetermined distance in the traveling direction of the asphalt finisher 100. The predetermined distance is within a maximum communicable distance of the total station TS.

A target TG is installed in the asphalt finisher 100. For example, the target TG is a prism. For example, in many cases, the target TG is installed in an upper portion of the screed 3. However, the target TG may be installed at any position as long as the target TG is visible from the total station TS.

The total station TS measures a distance and an angle between the total station TS and the target TG by irradiating the target TG with laser light and analyzing reflected light from the target TG. The total station TS may have an automatic tracking function of automatically collimating the target TG.

In a work site where road surface paving or the like is performed, many workers W carry out work around the asphalt finisher 100. Therefore, when the workers W enters between the total station TS and the target TG, the total station TS cannot measure a positional relationship with the target TG. As a result, in the information acquisition device 62, positioning data from the total station TS is interrupted. In the work site, not only the workers W but also various objects such as work tools and the like are present. Therefore, the same applies when the objects enter between the total station TS and the target TG.

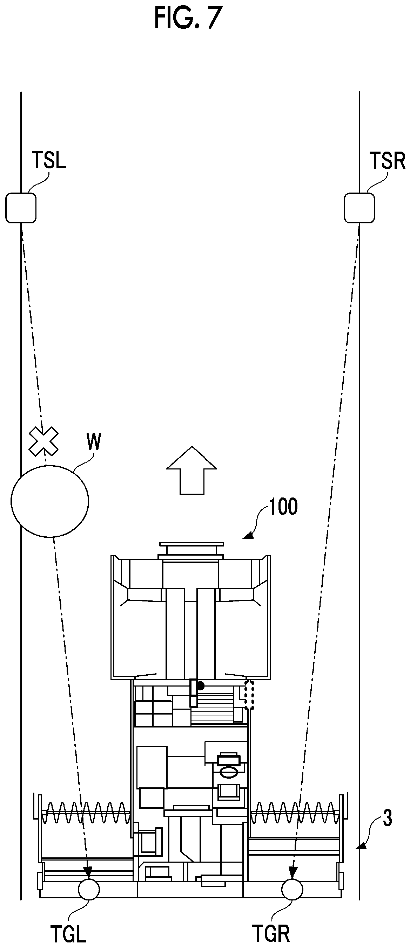

Fig. 7 is a view illustrating a second example of the situation where the reliability of the current position is degraded. When a plurality of the total stations are used, the data amount available for estimating the current position increases. Therefore, estimation accuracy of the current position is improved. As illustrated in Fig. 7, when two total stations TSL and TSR are used, in many cases, the total stations TSL and TSR are installed at a pair of left and right positions which are line-symmetrical in the traveling direction of the asphalt finisher 100. The total station TSL measures a relative positional relationship with a target TGL installed in the upper portion of the left expansion/contraction screed. The total station TSR measures a relative positional relationship with a target TGR installed in the upper portion of the right expansion/contraction screed.

In this case, when the worker W enters between the total station TSL and the target TGL, the total station TSL cannot measure a positional relationship with the target TGL. As a result, in the information acquisition device 62, the positioning data from the total station TSL is interrupted. In this case, the asphalt finisher 100 estimates the current position by using only the positioning data from the total station TSR. The number of the positioning data available for estimating the current position is reduced from two to one. Therefore, the reliability of the current position is degraded.

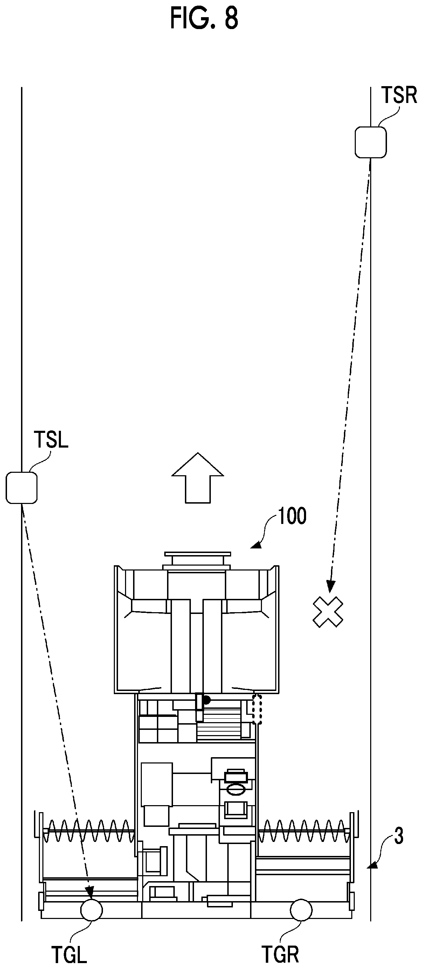

Fig. 8 is a view illustrating a third example of the situation where the reliability of the current position is degraded. When the asphalt finisher 100 travels to an installation position of the total station, it is necessary to further move the installation position of the total station in the traveling direction. As illustrated in Fig. 7, when the two total stations TSL and TSR are installed at the pair of left and right positions, the two total stations TSL and TSR need to be moved together. Therefore, the construction is stopped during that time, or the positioning data from both the total stations TSL and TSR is interrupted.

Therefore, as illustrated in Fig. 8, in some cases, the total station TSL installed on the left side in the traveling direction and the total station TSR installed on the right side in the traveling direction may be installed at positions having different distances from the asphalt finisher 100. In this case, when the asphalt finisher 100 travels to the position of the total station TSL, the total station TSL is moved ahead of the total station TSR. Thereafter, when the asphalt finisher 100 travels to the position of the total station TSR, the total station TSR is moved ahead of the total station TSL. When this movement is repeated, the positioning data from both the total stations TSL and TSR can be no longer interrupted.

However, there is a limit to a measurable distance or a communicable distance of the total station. Therefore, in some cases, only one positioning data that can be acquired from the total station may be available. In addition, even while one total station is moved, there is a situation in which only the positioning data from one total station can be acquired. In this case as well, the number of the positioning data available for estimating the current position is reduced from two to one. Therefore, the reliability of the current position is degraded.

Hereinbefore, a case where the current position is estimated by using the total station has been described. However, even when the current position is estimated by using the positioning satellite, a situation in which the reliability of the current position is degraded may occur. For example, in a place where a high-rise building is built around the place, the number of positioning satellites which can receive the satellite signals may be reduced in some cases. In addition, in a place where a structure is present above a tunnel, an overhead crossing, or the like, the number of positioning satellites which can receive the satellite signals is reduced.

### <Functional Configuration of Asphalt Finisher>

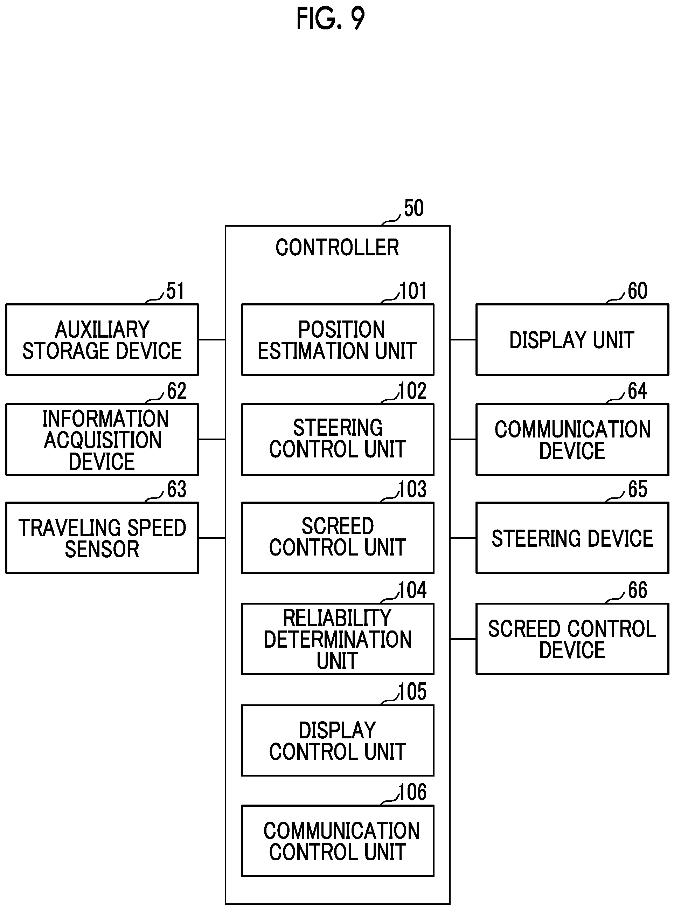

A functional configuration of the controller 50 that controls the asphalt finisher 100 will be described with reference to Fig. 9. Fig. 9 is a block diagram illustrating an example of the functional configuration of the controller according to the embodiment.

As illustrated in Fig. 9, the auxiliary storage device 51, the display unit 60, the information acquisition device 62, a traveling speed sensor 63, a communication device 64, a steering device 65, and a screed control device 66 are connected to the controller 50.

The auxiliary storage device 51 stores log information indicating a construction result obtained by the asphalt finisher 100. The log information includes information indicating a range where the reliability of the current position is degraded (hereinafter, also referred to as a "low reliability range"). The reliability of the current position depends on the data amount of the positioning data available for estimating the current position. Therefore, the low reliability range is a range in which the data amount of the positioning data decreases below a predetermined reference value.

For example, when the current position is estimated by using the total station, the low reliability range is a range of the road surface constructed until the positioning data from the total station is recovered after being interrupted. When a plurality of the total stations are used, the low reliability range is a range of the road surface constructed until the positioning data is recovered in all of the total stations after the positioning data from any one of the total stations is interrupted. In addition, for example, when the current position is estimated by using the positioning satellite, the low reliability range is a range of the road surface constructed until the number of which can receive the satellite signals is recovered to a predetermined number after the number of positioning satellites decreases below the predetermined number.

The information acquisition device 62 acquires the positioning data for estimating the current position. The positioning data is data indicating a relative positional relationship between the asphalt finisher 100 and a reference object. For example, the reference object is a surveying instrument. When the current position is estimated by using the total station, the reference object is the total station, and the positioning data is data indicating a relative positional relationship (distance and angle) between the total station and a target installed in the asphalt finisher 100. When the current position is estimated by using the positioning satellite, the reference object is the positioning satellite, and the positioning data is data indicating a relative positional relationship (direction and signal arrival time) between the positioning satellite and a receiver installed in the asphalt finisher 100.

In the present embodiment, the information acquisition device 62 acquires the positioning data by receiving the positioning data from the surveying instrument. The information acquisition device 62 includes at least one of a wireless communication device which can communicate with the total station and a radio wave receiver which can receive the satellite signal transmitted from the positioning satellite. For example, the wireless communication device includes at least one of a wireless LAN module, a mobile communication module, and a Bluetooth (registered trademark) module. For example, the radio wave receiver includes at least one of a GPS receiver and a GNSS receiver.

The information acquisition device 62 may acquire a detection result of detecting the road surface and an object around the asphalt finisher 100. For example, the information acquisition device 62 includes at least one of a monocular camera, a stereo camera, a distance image camera, an infrared camera, a distance sensor, and a LIDAR. For example, the distance sensor includes at least one of a millimeter wave radar, a laser radar, an ultrasonic sensor, and an infrared sensor.

The traveling speed sensor 63 is configured to detect a traveling speed of the asphalt finisher 100. For example, the traveling speed sensor 63 is an encoder that detects an angular velocity of a rotary shaft of a rear wheel traveling motor that drives a rear wheel of the tractor 1. The traveling speed sensor 63 may include a proximity switch or the like that detects a slit formed in a rotating plate.

The communication device 64 performs wireless communication with a device present around the asphalt finisher 100, a server that manages the work site, or the like. For example, as a wireless communication standard, the communication device 64 performs wireless communication by using any one or more of Wi-Fi (registered trademark), wireless LAN, Bluetooth (registered trademark), and the like.

The steering device 65 controls the tractor 1 in accordance with a control command. For example, the steering device 65 performs rotation control (speed control) on a rear wheel traveling motor of the tractor 1 and steering angle control on a front wheel (for example, an example of a drive wheel) of the tractor 1, to follow a steering angle and a speed which are indicated by a control command.

The screed control device 66 is configured to control expansion/contraction amounts of the left expansion/contraction screed and the right expansion/contraction screed. For example, the screed control device 66 controls a flow rate of a hydraulic oil flowing into a screed expansion/contraction cylinder for expanding/contraction of each of the left expansion/contraction screed and the right expansion/contraction screed. The screed control device 66 switches communication or blocking of a pipeline connecting a rod-side oil chamber of the screed expansion/contraction cylinder and the hydraulic pump, in response to the control command from the controller 50. In this manner, each of the left expansion/contraction screed and the right expansion/contraction screed can realize each expansion/contraction.

More specifically, the controller 50 includes a position estimation unit 101, a steering control unit 102, a screed control unit 103, a reliability determination unit 104, a display control unit 105, and a communication control unit 106, as functional blocks including software, hardware, or a combination thereof.

The position estimation unit 101 estimates the current position of the asphalt finisher 100, based on the positioning data acquired by the information acquisition device 62. In the present embodiment, the position estimation unit 101 estimates position coordinates of the asphalt finisher 100 in a reference coordinate system. For example, the reference coordinate system is the world geodetic system. The world geodetic system is a three-dimensional orthogonal XYZ coordinate system in which the center of gravity of the earth is an origin. In the world geodetic system, an X-axis is set in a direction of an intersection point between the Greenwich meridian and the equator, a Y-axis is set in a direction of the east longitude 90 degrees, and a Z-axis is set in a direction of the north pole.

The position estimation unit 101 may use road design data stored in the auxiliary storage device 51 when estimating the position coordinates of the asphalt finisher 100 in the reference coordinate system. The road design data is design data of a road which is a construction target. For example, the road design data may include information related to positions of ground objects such as a traffic signal, an electric pole, a manhole, and the like.

The position estimation unit 101 may estimate the current position of the asphalt finisher 100, based on a detection result acquired by the information acquisition device 62. For example, the position estimation unit 101 recognizes an image obtained by capturing the periphery of the asphalt finisher 100, and estimates the current position of the asphalt finisher 100, based on a positional relationship with an object captured in the image. The position estimation unit 101 may use the road design data stored in the auxiliary storage device 51 when estimating the current position, based on the detection result.

The steering control unit 102 outputs a control command for controlling an operation of the tractor 1 to the steering device 65. In the present embodiment, the steering control unit 102 outputs a control command indicating a steering angle and a traveling speed to the steering device 65 to move on the road surface which is the construction target, based on the current position estimated by the position estimation unit 101. The steering control unit 102 may determine a traveling route, based on the road design data stored in the auxiliary storage device 51. The steering control unit 102 may determine the traveling route, based on a detection result of the road surface acquired by the information acquisition device 62. In this manner, the controller 50 performs automatic steering control of the tractor 1 to perform a pavement process on the road surface which is the construction target.

The screed control unit 103 outputs a control command for controlling an operation of the screed 3 to the screed control device 66. In the present embodiment, the screed control unit 103 outputs a control command indicating the expansion/contraction amounts of the left expansion/contraction screed and the right expansion/contraction screed to the screed control device 66 in accordance with a shape of an end portion of the road surface which is the construction target. The screed control unit 103 may detect the shape of the end portion of the road surface, based on the road design data stored in the auxiliary storage device 51. The screed control unit 103 may extract the shape of the end portion of the road surface from a detection result of the road surface acquired by the information acquisition device 62. In this manner, the controller 50 performs automatic expansion/contraction control on the screed 3 to perform the pavement process in accordance with the shape of the end portion of the road surface which is the construction target.

The reliability determination unit 104 determines the reliability of the current position estimated by the position estimation unit 101, based on the positioning data acquired by the information acquisition device 62. In the present embodiment, the reliability determination unit 104 determines the reliability of the current position, based on the data amount of the positioning data. Specifically, the reliability determination unit 104 compares the data amount of the positioning data with a predetermined reference value, and determines that the reliability of the current position is degraded when the data amount of the positioning data falls below the reference value.

When the reliability determination unit 104 determines that the reliability of the current position is degraded, the reliability determination unit 104 records the position coordinates where the reliability is degraded, on the log information stored in the auxiliary storage device 51. In this manner, the log information indicating the low reliability range is stored in the auxiliary storage device 51.

The display control unit 105 controls the display unit 60 to display information related to the data amount of the positioning data acquired by the information acquisition device 62. The display control unit 105 may cause the display unit 60 to display the information related to the data amount of the positioning data when the reliability determination unit 104 determines that the reliability of the current position is degraded. In this case, the display control unit 105 may cause the display unit 60 to display a warning indicating that the data amount of the positioning data is reduced.

The communication control unit 106 controls transmission and reception of information with an external device by using the communication device 64. In the present embodiment, the communication control unit 106 transmits and receives information between the communication terminal 200 and the remote management device 300. The communication control unit 106 transmits information related to the data amount of the positioning data acquired by the information acquisition device 62 to at least one of the communication terminal 200 and the remote management device 300. In addition, the communication control unit 106 transmits the log information stored in the auxiliary storage device 51 to the remote management device 300.

### <<Recovery Method Proposal Function>>

The management system SYS according to the embodiment has a recovery method proposal function. The recovery method proposal function is a function of proposing a method for recovering the data amount of the positioning data.

In the recovery method proposal function, the reliability determination unit 104 determines a recovery method of the positioning data in accordance with a situation around the asphalt finisher 100. The display control unit 105 controls the display unit 60 to display information indicating the recovery method of the positioning data determined by the reliability determination unit 104.

For example, when the current position is estimated by using the total station, and when the positioning data from the total station is interrupted, the reliability determination unit 104 proposes to move an obstacle or a person existing between the asphalt finisher 100 and the total station, as the recovery method of the positioning data. In this case, the reliability determination unit 104 may propose to change an attachment position of a target installed in the asphalt finisher 100, as the recovery method of the positioning data.

In addition, for example, when the current position is estimated by using the positioning satellite, and when the number of positioning satellites which can receive the satellite signals is reduced, the reliability determination unit 104 proposes to move an attachment position of a radio wave receiver to a position where the satellite signal is easily received, as the recovery method of the positioning data. In this case, the reliability determination unit 104 may propose a candidate for the position where the satellite signal is easily received.

The reliability determination unit 104 records the proposed recovery method of the measurement data on the log information. The reliability determination unit 104 may receive an input of the recovery method performed by a user via an operation panel, and may record the recovery method performed by the user on the log information. The reliability determination unit 104 may record position coordinates where the recovery method is proposed or position coordinates where the recovery method is performed, on the log information, together with the recovery method of the measurement data.

### <<Log Confirmation Function>>

The management system SYS according to the embodiment has a log confirmation function. The log confirmation function is a function of confirming a construction result obtained by the asphalt finisher 100, based on the log information.

In the log confirmation function, the communication control unit 106 transmits the log information stored in the auxiliary storage device 51 to the remote management device 300. The remote management device 300 accumulates the log information received from the asphalt finisher 100 in the storage device such as the HDD 504 and the like.

The remote management device 300 displays a past construction result on the display unit, in response to an operation of a user who performs remote management. When the past construction result is displayed, the remote management device 300 displays the low reliability range included in the log information, as the construction result. When the recovery method is performed by the user, the remote management device 300 displays the performed recovery method and the acquired position coordinates, as the construction result. In this manner, the user of the remote management device 300 can confirm the low reliability range (that is, a range having a possibility that the construction accuracy is low) in the past construction result obtained by the asphalt finisher 100.

<Management Method>

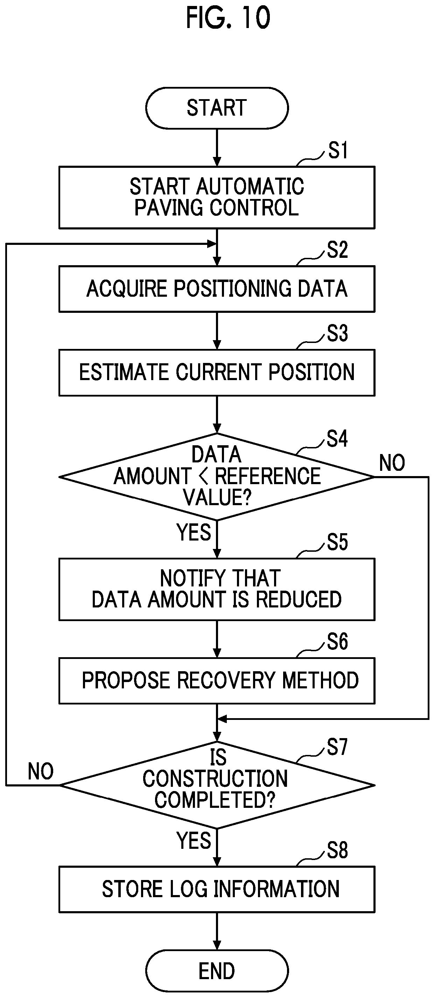

A management method performed by the management system SYS will be described with reference to Fig. 10. Fig. 10 is a flowchart illustrating an example of the management method according to the embodiment. The management method is a method for managing the asphalt finisher 100 including the automatic paving function.

In Step S1, the controller 50 of the asphalt finisher 100 starts the automatic paving control. First, the controller 50 reads the road design data from the auxiliary storage device 51. Next, the controller 50 acquires a range of the road surface which is the construction target, based on the road design data. Next, the steering control unit 102 of the controller 50 determines the traveling route, based on the range of the road surface which is the construction target, and outputs a control command indicating the steering angle and the traveling speed to the steering device 65. In addition, the screed control unit 103 of the controller 50 detects the shape of the end portion of the road surface from the range of the road surface which is the construction target, and outputs a control command indicating the expansion/contraction amounts of the left expansion/contraction screed and the right expansion/contraction screed to the screed control device 66.

In Step S2, the information acquisition device 62 of the asphalt finisher 100 acquires the positioning data for estimating the current position. The information acquisition device 62 outputs the acquired positioning data to the controller 50.

In Step S3, the position estimation unit 101 of the controller 50 estimates the current position of the asphalt finisher 100, based on the positioning data acquired in Step S2. The position estimation unit 101 transmits the estimated current position to the steering control unit 102 and the screed control unit 103. The steering control unit 102 and the screed control unit 103 continue the automatic paving control, based on the current position received from the position estimation unit 101.

In Step S4, the reliability determination unit 104 of the controller 50 calculates the data amount of the positioning data acquired in Step S2. When the current position is estimated by using the total station, for example, the data amount of the positioning data is the number of the total stations which can receive the positioning data. In addition, when the current position is estimated by using the positioning satellite, for example, the data amount of the positioning data is the number of the positioning satellites which can receive the satellite signals.

The reliability determination unit 104 determines the reliability of the current position estimated in Step S3, based on the data amount of the positioning data. Specifically, the reliability determination unit 104 determines whether or not the reliability of the current position is degraded, by comparing the data amount of the positioning data with a predetermined reference value. For example, the reference value is set to the data amount from which sufficient prediction accuracy can be obtained. For example, when two total stations are used, the reference value may be set to 2. For example, when the GPS satellite is used, the satellite signals from four positioning satellites are required in the GPS. Therefore, the reference value may be set to four.

When the data amount is smaller than the reference value (YES), the reliability determination unit 104 determines that the reliability of the current position is degraded, and the process proceeds to Step S5. On the other hand, when the data amount is equal to or greater than the reference value (NO), the reliability determination unit 104 determines that the reliability of the current position is not degraded, and the process proceeds to Step S7.

In Step S5, the display control unit 105 of the controller 50 displays the information related to the data amount of the positioning data on the display unit 60. The information related to the data amount of the positioning data may be a warning indicating that the data amount of the positioning data (or the reliability of the current position) is reduced. The information related to the data amount of the positioning data may be a numerical value indicating the data amount, a graph indicating a transition of the data amount, an icon indicating communication information with the total station or the positioning satellite, or an icon indicating that the data amount is reduced. In this manner, the operator of the asphalt finisher 100 can immediately recognize that the reliability of the current position is degraded.

When the information acquisition device 62 cannot acquire the positioning data in Step S2 (in other words, when the data amount of the positioning data is zero), the asphalt finisher 100 may stop the automatic paving control. Alternatively, the asphalt finisher 100 may stop the automatic paving control, and may cause the display unit 60 to display that the construction work has to be manually carried out. The reason is as follows. When the positioning data cannot be acquired, the construction accuracy is significantly degraded, and there is a possibility that the construction work has to be carried out again.

In addition, the communication control unit 106 of the controller 50 transmits the information related to the data amount of the positioning data to at least one of the communication terminal 200 and the remote management device 300. The communication terminal 200 or the remote management device 300 causes the display unit 506 to display the information related to the data amount of the positioning data. In this manner, a user who remotely manages the work site, a user who manages the work in the work site, and a user who carries out the work in the work site can immediately recognize that the reliability of the current position is degraded.

In Step S6, the reliability determination unit 104 of the controller 50 determines the recovery method of the positioning data in accordance with a situation around the asphalt finisher 100. Next, the display control unit 105 causes the display unit 60 to display information indicating the recovery method determined by the reliability determination unit 104.

In addition, the communication control unit 106 of the controller 50 transmits the information indicating the recovery method of the positioning data to at least one of the communication terminal 200 and the remote management device 300. The communication terminal 200 or the remote management device 300 causes the display unit to display the information indicating the recovery method of the positioning data.

In this manner, the operator of the asphalt finisher 100, the user who remotely manages the work site, the user who manages the work in the work site, or the user who carries out the work in the work site can quickly perform a process of recovering the data amount of the positioning data. When the data amount of the positioning data is recovered, the asphalt finisher 100 can accurately pave the road surface, based on the highly reliable current position.

In Step S7, the controller 50 determines whether or not the construction is completed for the road surface which is the construction target. When the construction is completed (YES), the controller 50 proceeds the process to Step S8. On the other hand, when the construction is not completed (NO), the controller 50 returns the process to Step S2.

After the process returns to Step S2, the controller 50 performs the processes again from Step S2 to Step S7. In this manner, the asphalt finisher 100 continues the automatic paving control until the construction is completed for the road surface which is the construction target.

In Step S8, the controller 50 stores the log information indicating the construction result in the auxiliary storage device 51. The controller 50 records a range in which it is determined in Step S4 that the reliability of the current position is degraded (low reliability range) on the log information. In addition, the controller 50 may record the proposed recovery method of the positioning data in Step S6 on the log information.

The communication control unit 106 of the controller 50 transmits the log information stored in the auxiliary storage device 51 to the remote management device 300. A timing for transmitting the log information may be determined in any desired way. The communication control unit 106 may frequently transmit the log information each time the log information is stored in the auxiliary storage device 51, or may collectively transmit the log information which is not transmitted at a predetermined time interval.

When the remote management device 300 receives the log information from the asphalt finisher 100, the remote management device 300 accumulates the received log information in the storage device. The remote management device 300 causes the display unit to display the construction result indicating the low reliability range, in response to an operation of the user who performs the remote management. In this manner, the user who performs the remote management can confirm a range of the road surface having a possibility that the construction accuracy is low, based on the past construction result. As a result, maintenance and management of the road surface can be efficiently promoted.

### <Advantageous Effects of Embodiment>

The asphalt finisher 100 according to the present embodiment estimates the current position of the asphalt finisher 100, and outputs information related to the data amount available for estimating the current position. As the data amount available for estimating the current position is smaller, the reliability of the estimated current position is degraded. When the construction work is carried out based on the current position having the low reliability, the construction accuracy is degraded. According to one aspect, in one aspect, it is possible to easily know that the reliability of the current position is degraded, and it is possible to quickly cope with the degraded reliability. Therefore, it is possible to suppress degradation of the construction accuracy.

The asphalt finisher 100 outputs the information related to the data amount when it is detected that the data amount available for estimating the current position decreases below a reference value. According to the present embodiment, the information is output only when the reliability of the current position is degraded. Therefore, it is possible to suppress a possibility of overlooking that the reliability of the current position is degraded.

The asphalt finisher 100 outputs the information indicating the recovery method of the data amount when it is detected that the data amount available for estimating the current position decreases below the reference value. According to the present embodiment, a process for recovering the data amount can be quickly performed. Therefore, the road surface can be accurately paved, based on the highly reliable current position.

The asphalt finisher 100 stores the information related to the data amount available for estimating the current position in the auxiliary storage device 51 of the asphalt finisher 100. The asphalt finisher 100 stores the log information indicating the position where the data amount is reduced. According to the present embodiment, it is possible to confirm the low reliability range (that is, a range having a possibility that the construction accuracy is low) in the past construction result obtained by the asphalt finisher 100.

The asphalt finisher 100 displays the information related to the data amount available for estimating the current position on the display unit 60 of the asphalt finisher 100. According to the present embodiment, the operator of the asphalt finisher 100 can immediately recognize that the reliability of the current position is degraded.

The asphalt finisher 100 transmits the information related to the data amount available for estimating the current position to the communication terminal 200 or the remote management device 300. According to the present embodiment, the user who remotely manages the work site, the user who manages the work in the work site, and the user who carries out the work in the work site can immediately recognize that the reliability of the current position is degraded.

Hitherto, the embodiment of the present disclosure has been described in detail. The embodiment disclosed this time is merely an example, and is not restrictive in all respects. The embodiment can be modified and improved in various forms without departing from the scope and the concept of the appended claims. The items described in the above-described embodiment can adopt other configurations within the scope in which the items do not conflict with each other, and the items can be combined with each other within the scope in which the items do not conflict with each other.

### Brief Description of the Reference Symbols

- 1:: tractor
- 2:: hopper
- 3:: screed
- 50:: controller
- 51:: auxiliary storage device
- 60:: display unit
- 61:: driver's seat
- 62:: information acquisition device
- 63:: traveling speed sensor
- 64:: communication device
- 65:: steering device
- 66:: screed control device
- 100:: asphalt finisher
- 101:: position estimation unit
- 102:: steering control unit
- 103:: screed control unit
- 104:: reliability determination unit
- 105:: display control unit
- 106:: communication control unit
- 200:: communication terminal
- 300:: remote management device
- CV:: conveyor
- SC:: screw
- SYS:: management system

## Claims

1. A road paving machine including a tractor (1), comprising:
a control device (50) that estimates a current position of the road paving machine; and
a steering device (65) that steers the tractor (1), based on the current position,
wherein the control device (50) is configured to output information related to a data amount available for estimating the current position.

2. The road paving machine according to claim 1,
wherein the data amount includes the number of pieces of positioning data received from a total station or the number of positioning satellites configured to receive a satellite signal.

3. The road paving machine according to claim 1,
wherein the control device (50) outputs information related to the data amount, only when the data amount decreases below a reference value, and does not output the information related to the data amount, when the data amount is equal to or greater than the reference value.

4. The road paving machine according to claim 3,
wherein when positioning data from a total station is interrupted or positioning satellites configured to receive a satellite signal are reduced, the data amount decreases below the reference value.

5. The road paving machine according to claim 3,
wherein the control device (50) outputs information indicating a recovery method of the data amount, when the control device (50) detects that the data amount decreases below the reference value.

6. The road paving machine according to claim 5,
wherein the recovery method includes moving an object existing between a total station and the road paving machine, changing an attachment position of a target installed in the road paving machine, or moving an attachment position of a radio wave receiver that receives a satellite signal from a positioning satellite.

7. The road paving machine according to any one of claims 1 to 6,
wherein outputting the information related to the data amount includes storing the information related to the data amount in a storage device (51) of the road paving machine, storing log information indicating a position where the data amount decreases, displaying the information related to the data amount on a display unit (60) of the road paving machine, or transmitting the information related to the data amount to an external device.

8. A management system (SYS) in which a road paving machine including a tractor (1) and an information processing device are configured to communicate with each other via a network,
wherein the road paving machine includes a control device (50) that estimates a current position of the road paving machine, and a steering device (65) that steers the tractor (1), based on the current position,
the control device (50) is configured to transmit information related to a data amount available for estimating the current position to the information processing device, and
the information processing device includes a display unit (60) that displays log information indicating the information related to the data amount.
